# EUROPEAN PATENT SPECIFICATION

(11) **EP 3 026 309 B1**
(45) Date of publication and mention of the grant of the patent: **16.05.2018**
(21) Application number: 15189375.7
(22) Date of filing: 12.10.2015
(51) Int. Cl.: F16K 17/16, F16K 17/40, F16K 31/02, A62C 37/10

(54) **FRANGIBLE DIAPHRAGM FOR USE IN A VALVE MECHANISM**
BERSTMEMBRAN ZUR VERWENDUNG IN EINEM VENTILMECHANISMUS
DIAPHRAGME FRANGIBLE DESTINÉ À ÊTRE UTILISÉ DANS UN MÉCANISME DE SOUPAPE

(30) Priority: 13.10.2014 GB 201418081
(43) Date of publication of application: 01.06.2016
(73) Proprietor: Kidde Graviner Limited, Slough, Berkshire SL3 0HB (GB)
(72) Inventor: SMITH, Paul D., Camberly, Surrey GU15 4AY (GB)
(74) Representative: Iceton, Greg James

(56) References cited:
- US-A- 3 088 478
- US-A- 3 184 097

## Description

### BACKGROUND

A frangible diaphragm for use in a valve mechanism, and, more particularly, a single-use valve mechanism that may be used for discharging fluid is described herein. The frangible diaphragm and valve mechanism may have particular use in the field of suppressant release, such as a fire suppressant fluid.

The examples described herein relate to devices and methods for the controlled release of a fluid flow substance. They are particularly suited, but not limited, to the controlled release of a suppressing or extinguishing agent from a cylinder. The devices and methods described may further be used for the rapid deployment of an extinguishing agent from a cylinder, such as those that may typically, although not exclusively, be used on moving platforms such as aircrafts, trains, military or commercial vehicles.

Such valves fall into two main groups; non-hermetic and hermetically sealed. The former category is typified by the high rate discharge (HRD) valves used on suppressors in military and commercial vehicles. These can be electromechanical or protractor fired, consisting of either a flapper or poppet as the main openings mechanism. Both systems contain multiple moving components and rely on O-ring seals for integrity. Such valves can be relatively expensive and require refurbishment prior to use.

Further applications, such as aerospace, require that the suppressor be hermetically sealed to minimise leakage over the required environmental range and to extend service life. Such hermetically sealed extinguishers use an explosive cartridge located on the outside of an outlet disc or diaphragm, which upon actuation ruptures and releases agent into a distribution network or directly into the protected fire zone. This method, although very fast and reliable, is prone to fragmentation of the diaphragm during actuation and requires the use of pyrotechnic cartridges. These valves require periodic maintenance and replacement and have associated handling, transit and storage restrictions.

The examples described herein aim to retain the rapid opening and free flow characteristics of the prior art, whilst reducing cost, removing pyrotechnic cartridges and providing the option for hermiticity where required.

DE 19736247 discloses a component having a body made of brittle material and the use of piezoelectric elements both embedded and laminated into the body such that, when the body is energized by the piezoelectric elements, a portion of the component is destroyed.

European Patent Application No. 14160040 discloses a ceramic disc with a pre-defined stress plane which is fractured by impact by a point force. Means for braze attachment of the disc, means for minimising fragmentation and a means for retaining the free section of the disc after fracture are also disclosed.

EP 1582789 describes devices and methods for controlling the release of a substance which are particularly suited to the control of substances such as fire extinguishing media. The devices and methods described comprise a housing having an inlet for connection to a source of a substance and an outlet, with a passage extending therebetween. The passage may be closed by a frangible element which comprises a ceramic disc that is connected to a source of electrical current. The disc may be a metal oxide ceramic disc, and may be fractured by an electrical pulse which is applied to the disc. Another frangible diaphragm using an embedded pyrotechnical charge is known from US 3,088,478 A1.

### SUMMARY OF THE INVENTION

In one example, there is provided a frangible diaphragm for use in a valve mechanism, said frangible diaphragm comprising an actuator substance provided in, or on, the frangible diaphragm, wherein the actuator substance expands from a smaller volume to a larger volume on application of heat such that a force generated by the expansion causes the diaphragm to fracture.

In this example, the actuator substance is a wax. The wax may be petroleum based or the wax may be a synthetic wax.

Further, the frangible diaphragm may comprise a heating element for heating the actuator substance. The heating element may be formed from a coil of resistance wire provided on, or in, the actuator substance.

Further, the frangible diaphragm may comprise one or more discs and the actuator substance may be provided in, or on, at least one of the one or more discs such that, when activated, the actuator substance causes at least one of the one or more discs to fracture. The actuator substance may be located adjacent an outer edge of at least one of the one or more discs.

The frangible diaphragm may further comprise means for rigidly attaching the one or more discs to each other. The means for rigidly attaching the one or more discs to each other may comprise a locking ring that is configured to be attached to a holder surrounding the one or more discs.

In another example, there is provided a valve mechanism comprising a valve body having an inlet port and an outlet port and a passageway extending therebetween and a frangible diaphragm as described above, wherein the diaphragm is held within the valve body such that the diaphragm blocks the passageway when the diaphragm is intact, and wherein, when the actuator substance is activated, the diaphragm fractures such that fluid can flow from the inlet port to the outlet port.

### BRIEF DESCRIPTION OF THE DRAWINGS

Figure 1 shows a view of a frangible diaphragm.
Figure 2 shows a view of section A-A of Figure 1.
Figure 3 shows a detail view of section B of Figure 2.
Figure 4 shows a view of the frangible diaphragm of Figure 1.
Figure 5 shows a view of an alternative frangible diaphragm.
Figure 6 shows a valve mechanism with the frangible diaphragm of Figure 1.

### DETAILED DESCRIPTION

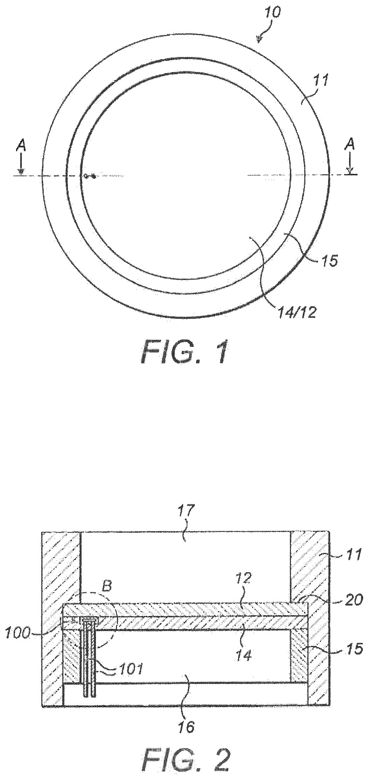

Figures 1 and 2 show a frangible diaphragm 10 for use in a valve mechanism is shown. In general, the frangible diaphragm 10 is provided between an inlet port and an outlet port of a valve mechanism (described later). The frangible diaphragm prevents fluid from flowing through the conduit, until it is activated, by forming a seal across the valve between the inlet and outlet port. When the frangible diaphragm is activated, the seal is broken so that fluid can flow through the conduit from the inlet port to the outlet port of the valve mechanism.

Generally, there is provided an actuator in the frangible diaphragm that expands when heated. The actuator may be embedded in, or formed on, the frangible diaphragm. When the actuator is heated, the expansion of the actuator is constrained thus creating a force causing the diaphragm to break. The seal provided by the diaphragm is therefore broken so that fluid can flow between the inlet port and outlet port of the valve mechanism.

The actuator in the frangible diaphragm 10 may be an actuator substance, for example, wax.

An example of a frangible diaphragm is shown in Figures 1-4. The frangible diaphragm 10 may be in the form of a disc, and in this example comprises a first disc 12 and a second disc 14 In the example where two discs are shown, the two discs allow for a lower force or smaller element to fracture the discs. The fluid pressure within the valve mechanism, against the discs, can cause one, or both, of the discs to fracture. First disc 12 and second disc 14 have an upper surface and a lower surface. The first disc 12 and second disc 14 provide, before activation, a seal that prevents fluid from moving from an upper conduit 17 to a lower conduit 16. As described later, the upper conduit 17 is in flow communication with an inlet port of the valve mechanism, and the lower conduit 16 is in flow communication with an outlet port of the valve mechanism. The first disc 12 and second disc 14 may be formed from a brittle ceramic material, for example alumina, but may also be formed from any similarly frangible, for example, brittle vitreous or polymeric material.

As shown in Figure 2, in one example, the upper surface of the second disc 14 is adjacent the lower surface of the first disc 12. The two discs 12 and 14 act as a seal to prevent fluid from flowing through the conduits 16 and 17. In order to maintain the position of the discs 12 and 14, a means for rigidly attaching the second disc 14 to the first disc 12 is included in the frangible diaphragm. In the example shown in Figure 2, the means for rigidly attaching the second disc 14 to the first disc 12 is a holder 11 that includes a screw thread to receive a locking ring 15. The discs 12 and 14 are placed in the holder 11 and the locking ring 15 is then screw threaded into the holder 11. A flanged portion 20 acts as a stop within the holder 11 such that the discs 12 and 14 are held in position in the holder 11. When the locking ring 15 is screw threaded into the holder 11, the second disc 14 and the first disc 12 are rigidly attached so as to prevent relative movement of the discs 12 and 14. In one example, the holder is metal, but the holder may also be formed from other suitable materials. Other means for rigidly attaching the discs 12 and 14 together could be used, for example by induction brazing to form a joint between the discs 12 and 14 around their outer diameter. Another example may be to use an adhesive/epoxy bonding on the lower surface of the first disc 12 and on the upper surface of the second disc 14.

A hermetic seal may be provided between the holder 11 and the firstdisc 12. In one example, the holder 11 may be braze attached to the first disc 12. For example, a hermetic seal may be provided through braze attachment of, for example, a low expansion alloy (i.e., Kovar TM) flange to both the first disc 12 and the holder 11.

The frangible diaphragm has a disc-shaped surface when forming a seal in a cylindrical valve conduit, but can of course be appropriately shaped to seal any conduit. As an example, the frangible diaphragm 10 of Figures 1-4 is shown to be cylindrical. The discs 12 and 14, and locking ring 15 are also shown to be cylindrical. However, these components of the frangible diaphragm 10 may be any other suitable shape.

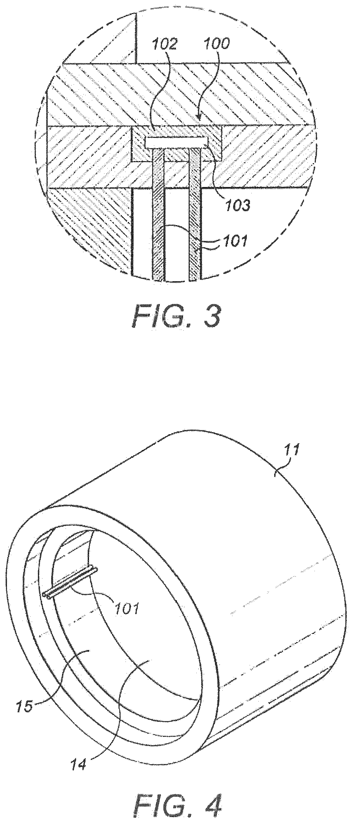

To break the seal, force is applied from within the diaphragm to fracture the diaphragm. As mentioned above, the force comes from an actuator that may be embedded in or formed on the frangible diaphragm to cause the diaphragm to fracture. In the two disc embodiment shown in Figures 2 and 3, for example, the actuator could be embedded in or formed on one of the discs causing that disc to rupture, with the other disc fracturing due to stresses applied to it from the fracture of the disc containing the actuator.

As shown in Figures 2 and 3, the second disc 14 includes means 100 for applying a force to the second disc 14. The means for applying a force, when activated, causes the second disc 14 to fracture. The first disc 12 then fractures due to the increased stress applied as a result of the other disc fracturing, for example, from the fluid in the upper fluid conduit 17 to allow fluid to flow through both the upper conduit 17 to the lower conduit 16 (i.e., from an inlet port to an outlet port of the valve mechanism). In the example shown in Figure 2, the means 100 for applying a force to the diaphragm includes an actuator substance 102 capable of expansion. In this particular example, the actuator substance is embedded in or located in a void (not shown) in the second disc 14. In other examples, the actuator substance could be in the first disc 12 or both discs 12 and 14 or the diaphragm may comprise only a single disc or more than two discs.

For activation, some means are provided to heat the actuator substance. In this example, a heating element 103 is attached to or embedded in the actuator substance. The heating element 103 is connected to, for example, an electrical power supply such that heat can be applied to the wax actuator 102. In some examples, the electrical power supply could be a constant current power supply or a current limited DC power supply. The heat from the heating element 103 causes the actuator substance 102 to expand. In one example, the expansion of the actuator substance 102 occurs due to a change of state of the actuator substance when applied with heat. For example, the actuator substance 102 could move from a solid state to a liquid state, when heated. In an example, the heating element 103 may be formed from a coil of resistance wire. As an example, where the actuator substance is 5mm in diameter and 1mm long, 12 J would be required to bring the actuator substance to a melting temperature, for example 100 Celsius.

As the actuator substance 102 expands. it delivers stress to the disc in which it is provided - here, the second disc 14, for example. This exerts a force on to the second disc 14 such that the second disc 14 fractures. In some examples, the actuator substance 102 expands by between 10%-20%. As the actuator substance 102 is constrained by its location in the disc - here, being provided in a void in the second disc 14, it is unable to expand and so a stress is applied to the second disc 14. As an example, this may be a force of between 200MPa and 400MPa. The stress applied to the second disc 14 causes the second disc 14 to fracture. In the examples shown, the wax actuator 102 and heating element 103 are located adjacent to the outer edge of the second disc 14 to ensure that the fracture propagates around the circumference of the disc to form a clear open aperture.

The surfaces of the first and second disc 12 and 14 may be sufficiently smooth so as to provide a liquid tight seal to prevent leakage of the actuator substance 102 when, for example, it is in a liquid state. Alternatively, an additional seal may be positioned between the first disc 12 and the second disc 14 to prevent leakage of the actuator substance 102. For example, a thin metallic (e.g. copper) film may be incorporated between the first disc 12 and the second disc 14.

In the example shown in Figures 2 and 3, the actuator substance 102 and the heating element 103 are connected to an electrical power supply by leads 101. The leads 101 extend through the second disc 14 and through the lower conduit 16 to an electrical power supply (not shown). A liquid tight seal may be formed between the leads 101 and the second disc 14. This liquid tight seal may be formed by a suitable metal to ceramic bond, for example, braze attachment or a suitable ceramic epoxy.

As mentioned above, when the actuator substance 102 is heated, the disc in which it is embedded - here, the second disc 14, fractures. The fluid contained in the upper conduit 17 is in fluid communication with the first disc 12. This applies additional stress to the first disc 12. The first disc 12 is fractured from the pressure applied to the upper surface of the first disc 12 by the fluid contained in the upper conduit 17. As the first disc 12 fractures, this allows for fluid communication between the upper conduit 17 and lower conduit 16, thereby allowing the extinguishing fluid to flow from the inlet port to the outlet port of the valve mechanism.

The first disc 12 may be made of a weaker material than the second disc 14 making it break under the pressure of the fluid once the second disc 14 has been broken. Alternatively, both discs could be made of the same material but break under the force of the fluid when the overall thickness has been reduced by breakage of the second disc 14.

The fact that the discs, 12 and 14, are constrained together, for example by holder 11, also means that the force that fractures the second disc 14 will act to some extent on the first disc 12.

The actuator substance 102 may be a wax, but other suitable materials may also be used. For example, the actuator substance 102 could be a petroleum based wax (e.g. paraffin or microcrystalline), a synthetic polymer wax (e.g. ethylenic polymers, chlorinated naphthalenes), natural animal or vegetable wax (e.g. beeswax, carnauba).

Although a two-disc arrangement has been described, it is envisaged that one disc or more than two discs could be provided to form a seal between an inlet port and outlet port. One or more discs may have an actuator substance, as described above, to fracture one or more discs.

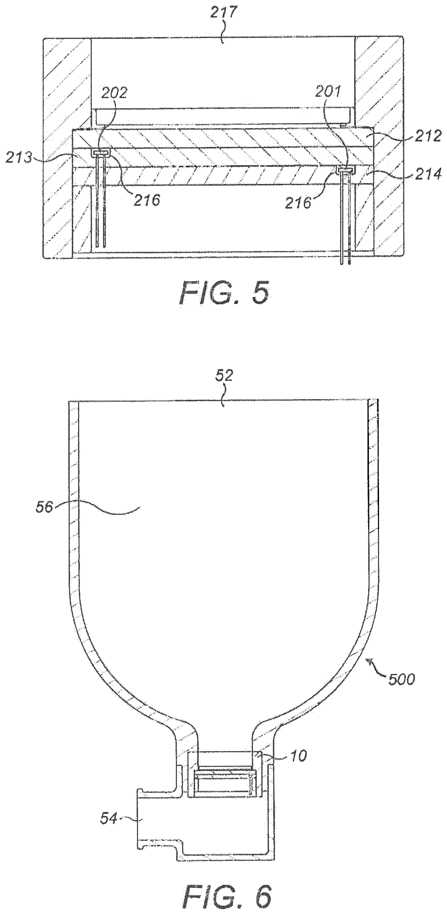

Figure 5 shows an alternative to the arrangement shown in Figures 2 and 3. In this example, the frangible diaphragm 10 comprises three discs 212, 213 and 214. The three discs 212, 213 and 214 each have an upper and a lower surface. The first disc 212, second disc 213 and third disc 214 provide, before activation, a seal that prevents fluid from moving from an upper conduit 217 to a lower conduit 216. The upper surface of the first disc 212 is in fluid communication with the fluid contained in the upper conduit 217 and the third disc is in fluid communication with the lower conduit 216.

As with the example shown in Figures 2 and 3, the first disc 212, second disc 213 and third disc 214 can be rigidly attached by a holder 11, as described above. The holder 11, and locking ring 15 rigidly attach the discs 212, 213 and 214 to prevent relative movement of the discs 212, 213 and 214. Other means for rigidly attaching the discs 212, 213 and 214 could be used, as described above.

As above, the frangible diaphragm has a disc-shaped surface when forming a seal in a cylindrical valve conduit, but, of course, can be appropriately shaped to seal any conduit.

In the example shown in Figure 5, the second disc 213 and third disc 214 include means 201 and 202 for applying a force to the second disc 213 and third disc 214, respectively. The means 201 and 202 for applying a force, when activated, can cause the second disc 213 and third disc 214 to fracture. The first disc 212 then fractures due to the force applied as a result of the other discs fracturing, for example, from the fluid in the upper conduit 217. As with the example shown in Figures 2 and 3, the means 201 and 202 for applying a force to the second disc 213 and third disc 214 includes an actuator substance. As can be seen in Figure 5, the actuator substance 202 is embedded in, or located in, a void in the second disc 213 and the actuator substance 201 is embedded in, or located in, a void in the third disc 214.

For activation, some means are provided to heat the actuator substances 201 and 202, as described above in relation to Figures 2 and 3. When heat is provided, the actuator substances expand and deliver stress to the discs in which they are provided - here, the second disc 213 and third disc 214. This exerts a force on the second disc 213 and third disc 214 such that the second disc 213 and third disc 214 fracture in a similar way to the two-disc arrangement described above in relation to Figures 2 and 3. This allows for the first disc 212 to fracture from pressure applied by the fluid contained in the upper conduit 217. Of course, an actuator substance could also be present in the first disc 212 of the frangible diaphragm, or could only be present in one of the discs 212, 213 or 214.

As above, the first disc 212 may be made of a weaker material than the second and third discs 213 and 214 making it break under the pressure of the fluid once the second and third discs 213 and 214 have been broken. Alternatively, all three discs could be made of the same material but break under the force of the fluid when the overall thickness has been reduced by breakage of the second and third discs 213 and 214.

A valve mechanism 500 including the frangible diaphragm 10 is shown in Figure 6. The valve mechanism 500 includes a valve body having an inlet port 52 and an outlet port 54, and a passageway 56 extending therebetween. The frangible diaphragm 10 is positioned in the valve mechanism 500 to provide a seal between the inlet port 52 and the outlet port 54. The upper conduit 17 of the frangible diaphragm 10 (as shown in Figures 1-3) is in fluid communication with the inlet port 52. The lower conduit 16 of the frangible diaphragm 10 is in fluid communication with the outlet port 54. When the frangible diaphragm is activated, as discussed above, the seal is broken to provide a fluid flow from the inlet port 52, through the lower and upper conduits of the frangible diaphragm, to the outlet port 54 for deployment of an extinguishing agent.

The valve mechanism 500 described above is therefore a single-use, or repairable, valve mechanism that provides significant advantages over previous valve mechanisms, as, when operated, it is able to create a clear opening between the inlet port 52 and the outlet port 54 of the valve due to the fact that the frangible diaphragm 10 provides a clear open aperture using an actuator substance 102.

This valve mechanism also allows for the minimisation of the number of components and the complexity of the valve design, thereby reducing cost of the valve mechanism. It further retains the rapid opening and free flow characteristics of known devices and methods, whilst removing the need for pyrotechnic cartridges and providing the option for hermiticity where required.

## Claims

1. A frangible diaphragm (10) for use in a valve mechanism, said frangible diaphragm comprising:
an actuator substance (102) provided in, or on, the frangible diaphragm (10), wherein the actuator substance (102) expands from a smaller volume to a larger volume on application of heat such that a force generated by the expansion causes the diaphragm (10) to fracture; and **characterised in that** the actuator substance (102) is wax.

2. The frangible diaphragm of claim 1 wherein the wax (102) is petroleum based.

3. The frangible diaphragm of claim 1 wherein the wax is a synthetic wax.

4. The frangible diaphragm of any preceding claim, wherein the frangible diaphragm (10) further comprises:
a heating element (103) for heating the actuator substance.

5. The frangible diaphragm of claim 4, wherein the heating element (103) is formed from a coil of resistance wire provided on, or in, the actuator substance (102).

6. The frangible diaphragm (10) of any preceding claim, wherein the frangible diaphragm further comprises:
one or more discs (12, 14); and
wherein the actuator substance (102) is provided in, or on, at least one of the one or more discs (12, 14) such that, when activated, the actuator substance causes at least one of the one or more discs (12, 14) to fracture.

7. The frangible diaphragm (10) of claim 6 wherein the actuator substance (102) is located adjacent an outer edge of at least one of the one or more discs (12, 14).

8. The frangible diaphragm (10) of claims 6 and 7, further comprising means (11) for rigidly attaching the one or more discs to each other.

9. The frangible diaphragm (10) of claim 8 wherein the means for rigidly attaching (11) the one or more discs to each other comprises a locking ring that is configured to be attached to a holder surrounding the one or more discs.

10. A valve mechanism comprising:
a valve body having an inlet port (52) and an outlet port (54) and a passageway extending therebetween; and
a frangible diaphragm (10) as claimed in any preceding claim, wherein the diaphragm is held within the valve body such that the diaphragm blocks the passageway when the diaphragm is intact, and wherein, when the actuator substance is activated, the diaphragm fractures such that fluid can flow from the inlet port (52) to the outlet port (54).

## Patentansprüche

1. Berstmembran (10) zur Verwendung in einem Ventilmechanismus, wobei die Berstmembran Folgendes umfasst:
eine Betätigersubstanz (102) in oder auf der Berstmembran (10) bereitgestellt, wobei sich die Betätigersubstanz (102) bei Anwendung von Wärme von einem kleineren Volumen zu einem größeren Volumen erweitert, so dass eine Kraft, die durch die Erweiterung erzeugt wurde, die Membran (10) dazu veranlasst, zu brechen; und
**dadurch gekennzeichnet, dass** die Betätigersubstanz (102) Wachs ist.

2. Berstmembran nach Anspruch 1, wobei das Wachs (102) auf Erdöl basiert.

3. Berstmembran nach Anspruch 1, wobei das Wachs ein synthetisches Wachs ist.

4. Berstmembran nach einem der vorstehenden Ansprüche, wobei die Berstmembran (10) ferner Folgendes umfasst:
ein Wärmeelement (103) zum Erwärmen der Betätigersubstanz.

5. Berstmembran nach Anspruch 4, wobei das Wärmeelement (103) aus einer Spule mit Widerstandsdraht, die auf oder in der Betätigersubstanz (102) bereitgestellt ist, gebildet wird.

6. Berstmembran (10) nach einem der vorstehenden Ansprüche, wobei die Berstmembran ferner Folgendes umfasst:
eine oder mehrere Scheiben (12, 14); und
wobei die Betätigersubstanz (102) in oder auf zumindest einer der einen oder mehreren Scheiben (12, 14) bereitgestellt ist, so dass die Betätigersubstanz bei Aktivierung zumindest eine der einen oder mehreren Scheiben (12, 14) dazu veranlasst, zu brechen.

7. Berstmembran (10) nach Anspruch 6, wobei sich die Betätigersubstanz (102) neben einer Außenkante von zumindest einer der einen oder mehreren Scheiben (12, 14) befindet.

8. Berstmembran (10) nach Anspruch 6 oder 7, ferner umfassend ein Mittel (11) zum starren Befestigen der einen oder mehreren Scheiben aneinander.

9. Berstmembran (10) nach Anspruch 8, wobei das Mittel zum starren Befestigen (11) der einen oder mehreren Scheiben aneinander einen Verriegelungsring umfasst, der konfiguriert ist, um an einem Halter befestigt zu sein, der die eine oder mehreren Scheiben umgibt.

10. Ventilmechanismus, umfassend:
einen Ventilkörper mit einer Einlassöffnung (52) und einer Auslassöffnung (54) und einem Durchgang, der sich dazwischen erstreckt; und
eine Berstmembran (10) nach einem der vorstehenden Ansprüche, wobei die Membran innerhalb des Ventilkörpers gehalten wird, so dass die Membran den Durchgang blockiert, wenn die Membran intakt ist, und wobei, wenn die Betätigersubstanz aktiviert ist, die Membran bricht, so dass Fluid von der Einlassöffnung (52) zu der Auslassöffnung (54) fließen kann.

## Revendications

1. Diaphragme frangible (10) destiné à être utilisé dans un mécanisme de soupape, ledit diaphragme frangible comprenant :
une substance d'actionneur (102) appliquée dans ou sur le diaphragme frangible (10), dans lequel la substance d'actionneur (102) se dilate d'un volume plus petit à un volume plus grand lors de l'application de chaleur de sorte qu'une force générée par la dilatation provoque la fracture du diaphragme (10) ; et
**caractérisé en ce que** la substance d'actionneur (102) est la cire.

2. Diaphragme frangible selon la revendication 1, dans lequel la cire (102) est à base de pétrole.

3. Diaphragme frangible selon la revendication 1, dans lequel la cire est une cire synthétique.

4. Diaphragme frangible selon une quelconque revendication précédente, dans lequel le diaphragme frangible (10) comprend en outre :
un élément chauffant (103) pour chauffer la substance d'actionneur.

5. Diaphragme frangible selon la revendication 4, dans lequel l'élément chauffant (103) est formé d'une bobine de fil de résistance appliquée sur ou dans la substance d'actionneur (102) .

6. Diaphragme frangible (10) selon une quelconque revendication précédente, dans lequel le diaphragme frangible comprend en outre :
un ou plusieurs disques (12, 14) ; et
dans lequel la substance d'actionneur (102) est appliquée dans ou sur au moins l'un des un ou plusieurs disques (12, 14) de sorte que, lorsqu'elle est activée, la substance d'actionneur provoque la fracture d'au moins l'un des un ou plusieurs disques (12, 14).

7. Diaphragme frangible (10) selon la revendication 6, dans lequel la substance d'actionneur (102) est située adjacente à un bord externe d'au moins l'un des un ou plusieurs disques (12, 14) .

8. Diaphragme frangible (10) selon les revendications 6 et 7, comprenant en outre un moyen (11) de fixation rigide des un ou plusieurs disques les uns aux autres.

9. Diaphragme frangible (10) selon la revendication 8, dans lequel le moyen de fixation rigide (11) des un ou plusieurs disques les uns aux autres comprend un anneau de verrouillage qui est conçu pour être fixé à un support entourant les un ou plusieurs disques.

10. Mécanisme de soupape, comprenant :
un corps de soupape ayant un orifice d'entrée (52) et un orifice de sortie (54) et un passage s'étendant entre eux ; et
un diaphragme frangible (10) selon une quelconque revendication précédente, dans lequel le diaphragme est maintenu à l'intérieur du corps de soupape de sorte que le diaphragme bloque le passage lorsque le diaphragme est intact, et dans lequel, lorsque la substance d'actionneur est activée, le diaphragme se fracture de sorte que le fluide peut s'écouler de l'orifice d'entrée (52) à l'orifice de sortie (54).
